# EUROPÄISCHE PATENTSCHRIFT

(11) **EP 1 445 156 B1**
(45) Veröffentlichungstag und Bekanntmachung des Hinweises auf die Patenterteilung: **02.08.2006**
(21) Anmeldenummer: 03025283.7
(22) Anmeldetag: 06.11.2003
(51) Int. Cl.: B60R 21/20, B60R 21/16

(54) **Seitenaufprallschutzeinrichtung für einen Fahrzeuginsassen**
Side impact protection device for a vehicle passenger
Dispositif de protection contre le choc latéral pour un occupant de véhicule

(30) Priorität: 06.02.2003 DE 10304790
(43) Veröffentlichungstag der Anmeldung: 11.08.2004
(73) Patentinhaber: Dr. Ing. h.c. F. Porsche Aktiengesellschaft, 70435 Stuttgart (DE)
(72) Erfinder: Hofmann, Peter, 75242 Neuhausen (DE)

(56) Entgegenhaltungen:
- EP-A- 0 771 699
- EP-A- 1 043 197
- PATENT ABSTRACTS OF JAPAN vol. 1996, no. 07, 31. Juli 1996 (1996-07-31) & JP 08 072658 A (TOYODA GOSEI CO LTD;TOYOTA MOTOR CORP), 19. März 1996 (1996-03-19)

## Beschreibung

Die Erfindung betrifft eine Seitenaufprallschutzeinrichtung für einen Fahrzeuginsassen, die in eine Seitenwand eines Kraftfahrzeuges, insbesondere in eine Fahrzeugtür integriert ist, nach dem Oberbegriff des Patentanspruchs 1.

Eine bekannte Seitenaufprallschutzeinrichtung, EP 0 771 699 A2, der eingangs genannten Gattung ist in eine Fahrzeugtür integriert und umfaßt eine Druckgasquelle sowie einen durch diese aufblasbaren Gassack. Der Gassack ist an einem längsseitigen Endbereich mit der Druckgasquelle verbunden und das andere längsseitige Ende ist über einen Gewebelappen mit der Fahrzeugtür verbunden. Beim Entfalten des Gassackes wird die Verkleidung von der Fahrzeugtür gelöst, so daß der Gassack durch einen zwischen dem oberen Rand der Verkleidung und der Fahrzeugtür gebildeten Spalt nach oben hin austritt und sich entlang einer Innenseite der Türscheibe nach oben hin als Aufprallschutz für den Kopfbereich des Fahrzeuginsassen erstreckt. Für die Befestigung der Verkleidung an der Fahrzeugtür ist im Bereich der Fahrzeugscheibe eine leicht lösbare Verbindung, bspw. eine Klipsverbindung, vorgesehen.

Dieser Anordnung haftet der Nachteil an, daß die zweifache Anbindung des Gassackes an die Fahrzeugtür aufwendig und kostenintensiv ist. Die Ausgestaltung der lösbaren Klipsverbindungen gestaltet sich schwierig, da einerseits eine bestimmte Standfestigkeit der Verkleidung gegeben sein muß, beispielsweise beim Auflegen des Unterarmes während des Fahrens auf die Oberseite der Verkleidung. Andererseits muß über einen relativ großen Temperaturbereich ein schnelles und sicheres Lösen der Klipsverbindungen bei einem Fahrzeugcrash gewährleistet sein.

Aufgabe der Erfindung ist es, die Anbindung des oberen Randbereiches einer Verkleidung an der angrenzenden Seitenwand, insbesondere Fahrzeugtüre so weiterzubilden, daß mit einfachen Mitteln einerseits eine hohe Standfestigkeit der Verkleidung erzielt wird und daß andererseits über einen großen Temperaturbereich ein definiertes Austreten des Gassackes während der vorgegebenen Entfaltungszeit zwischen Fahrzeugtür und Verkleidung sichergestellt ist.

Erfindungsgemäß wird diese Aufgabe durch die Merkmale des Anspruchs 1 gelöst. Weitere die Erfindung in vorteilhafter Weise ausgestaltende Merkmale enthalten die Unteransprüche.

Die mit der Erfindung hauptsächlich erzielten Vorteile sind darin zu sehen, daß durch eine gezielte Befestigung der Verkleidung an der Fahrzeugtür und durch eine projektierte Schwächung an der Stirnseite der Verkleidung einerseits eine hohe Standfestigkeit der Verkleidung im Normalbetrieb und andererseits ein definiertes Verschwenken nur des oberen Randbereiches der Türverkleidung in Richtung Fahrzeuginsassen beim Entfalten des Gassackes erfolgt.

Vorteilhafterweise ist die Verkleidung benachbart den beiden längsseitigen Enden des Gassackes an der Seitenwand, insbesondere der Fahrzeugtür etwa in Höhe des unteren Randbereiches des Gassackes befestigt, wobei in der Seitenansicht gesehen eine ideelle Verbindungslinie durch die beiden beabstandeten Befestigungen eine Schwenkachse für den verschwenkbaren oberen Randbereich der Verkleidung bildet. An der angrenzenden Stirnseite der Verkleidung ist etwa in Höhe der Seitenaufprallschutzeinrichtung eine definierte Schwächung an der Verkleidung vorgesehen. Die Schwächung wird durch eine werkzeugfallende Einkerbung oder durch nachträglich angebrachte aneinandergesetzte kreisförmige Bohrungen bzw. aneinandergesetzte schlitzförmige Öffnungen gebildet. Die stirnseitige Schwächung unterstützt das Wegschwenken des oberen Randbereiches der Verkleidung beim Entfalten des Gassackes wirkungsvoll. Benachbart der ideellen Schwenkachse oder in einem darüberliegenden Bereich kann an der Verkleidung eine längsgerichtete Querschnittsverringerung vorgesehen sein, so daß sich die Verkleidung beim Entfalten des Gassackes gezielt um diesen Bereich verschwenkt. In vorteilhafter Weise ist in das Trägerteil der Verkleidung zumindest benachbart der Seitenaufprallschutzeinrichtung eine umspritzte eingelegte Gewebeeinlage vorgesehen.

Dadurch wird erreicht, daß beim Verschwenken des oberen Randbereiches der Verkleidung kein undefiniertes Einreißen des Trägerteiles erfolgt. Die stirnseitige Befestigungsschraube und die benachbart angeordnete Schwächung sind durch eine aufgesetzte Abdeckkappe verkleidet.

In der Zeichnung wird ein Ausführungsbeispiel der Erfindung gezeigt, das nachstehend näher beschrieben wird.
Es zeigen
- Fig. 1: eine Seitenansicht von innen gegen eine Fahrzeugtür mit einer hinter einer inneren Verkleidung angeordneten Seitenaufprallschutzeinrichtung,
- Fig. 2: einen Schnitt nach der Linie II-II der Fig. 1 in größerer Darstellung,
- Fig. 3: eine perspektivische Ansicht von schräg hinten auf den oberen Randbereich der inneren Verkleidung und

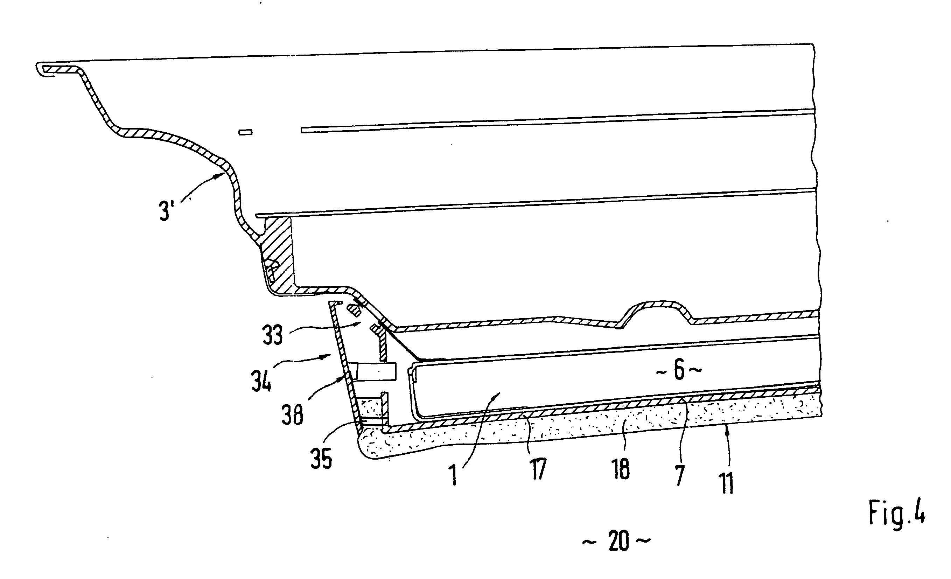

- Fig. 4: einen Schnitt nach der Linie IV-IV der Fig. 1 in größerer Darstellung.

Eine Seitenaufprallschutzeinrichtung 1 für einen Fahrzeuginsassen 2 ist in eine Seitenwand 3 eines Kraftfahrzeuges, insbesondere eine Fahrzeugtür 3' integriert und umfaßt eine Druckgasquelle 4, die über eine gebogene Gaslanze 5 mit einem durch die Druckgasquelle 4 aufblasbaren Gassack 6 in Wirkverbindung steht. Die Druckgasquelle 4 kann jeder beliebige Gasgenerator sein, der in der üblicherweise zur Verfügung stehenden Zeit die zum Aufblasen des Gassackes 6 erforderlichen Menge an Druckgas bereitstellen kann. Der zusammengefaltete, langgestreckte Gassack 6 ist von einer äußeren Umhüllung 7 umgeben, die beim Entfalten des Gassackes 6 bereichsweise aufreißt.

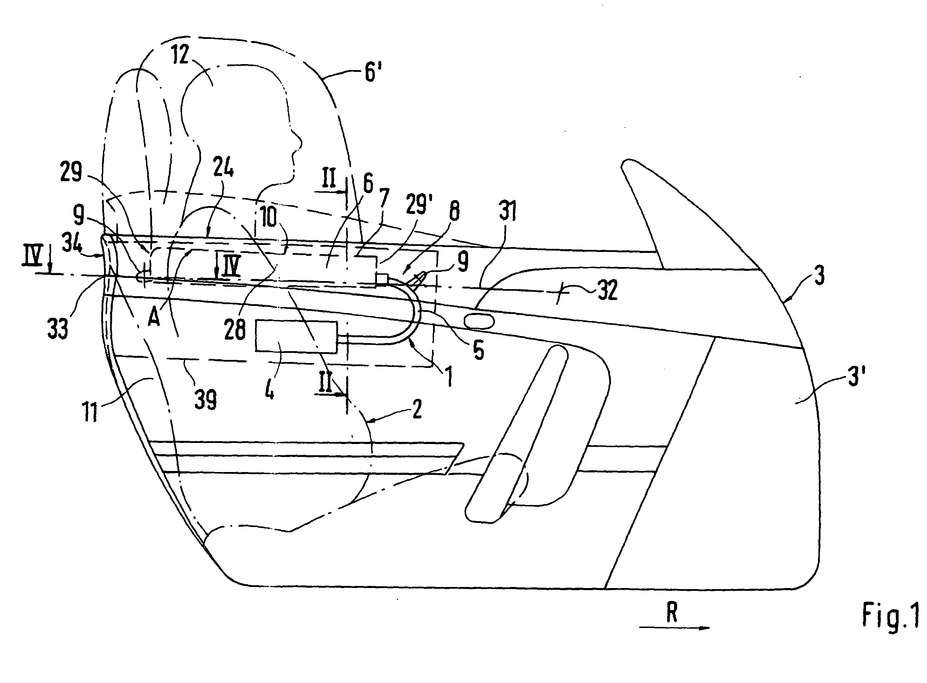

Gemäß Fig. 1 bilden der Gassack 6, die Umhüllung 7, die Gaslanze 5 und die Druckgasquelle 4 ein vorgefertigtes Airbagmodul 8, wobei der Gassack 6 mit seiner Umhüllung 7 an der Seitenwand 3, insbesondere an der Fahrzeugtür 3', durch Schrauben 9 oder dgl. befestigt ist. Gemäß Fig. 1 bilden der zusammengefaltete Gassack 6 und die Umhüllung 7 ein langgestrecktes Paket, das im Ruhezustand A entlang dem oberen längsverlaufenden Rand 10 der Seitenwand 3 (Fahrzeugtür 3') hinter einer inneren Verkleidung 11 angeordnet ist. Die Druckgasquelle 4 erstreckt sich entsprechend Fig. 1 unterhalb des zusammengefalteten Gassackes 6.

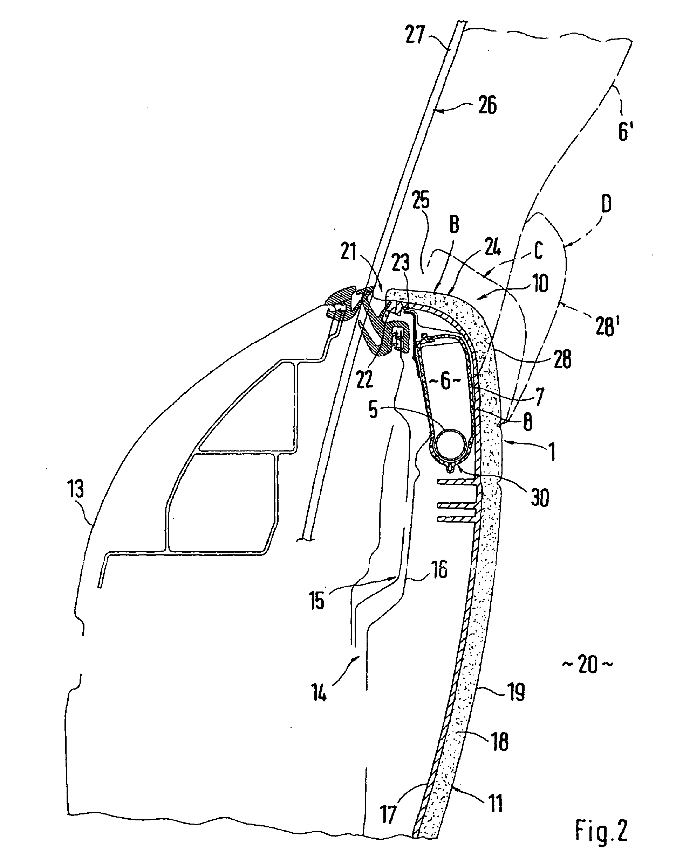

Im Ausführungsbeispiel ist die Seitenaufprallschutzeinrichtung 1 in die Fahrzeugtür 3' integriert und der aufgeblasene Gassack 6' wirkt als Kopfairbag 12 für den Fahrzeuginsassen 2. Die Seitenaufprallschutzeinrichtung 1 könnte jedoch auch einem feststehenden Fondseitenteil eines Kraftfahrzeuges zugeordnet sein. In den Fig. 1 und 2 ist die aufgeblasene Stellung des Gassackes 6 in gestrichelten Linien dargestellt und mit dem Bezugszeichen 6' versehen.

Gemäß Fig. 2 besteht die Fahrzeugtür 3' aus einem Außenblech 13, das randseitig mit einem Türinnenteil 14 durch Bördeln, Schweißen oder dgl. verbunden ist. Im Ausführungsbeispiel setzt sich das Türinnenteil 14 aus einem umlaufenden äußeren Rahmen 15 und einem großflächigen Innenblech 16 zusammen, wobei beide Bauteile umfangsseitig lösbar miteinander verbunden sind.

Die innere Verkleidung 11 umfaßt ein Trägerteil 17 aus Kunststoff, eine PU-Schaumfage 18 sowie eine Dekorschicht 19. Die einem Fahrgastraum 20 zugekehrte Dekorschicht 19 wird durch eine Tiefziehfolie, eine Slushhaut, eine Leder- oder Kunstlederschicht oder dgl. gebildet. Die innere Verkleidung 11 ist mit ihrem oberen Rand 21 am Türinnenteil 14 eingehängt und umfangsseitig über lösbare Befestigungsmittel mit der Fahrzeugtür 3' verbunden. Die Einhängeverbindung wird durch eine nach unten ragende Abstellung 22 der Verkleidung 11 gebildet, die einen zur Fahrzeugaußenseite hin ragenden endseitigen Flansch 23 des Innenblechs 16 hintergreift (Fig. 2). Die Verkleidung 11 liegt bereichsweise mit Abstützrippen an der Oberseite des Flansches 23 auf.

Im Bedarfsfall kann die Druckgasquelle 4 durch eine (nicht dargestellte) Auslösesensorik gezündet werden, so daß eine bestimmte Menge von unter Druck stehendem Gas freigesetzt wird. Beim Entfalten des Gassackes 6 tritt dieser im Bereich einer Brüstung 24 der Seitenwand 3, insbesondere der Fahrzeugtür 3', durch einen zwischen dem oberen Rand der Verkleidung 11 und der Seitenwand 3 gebildeten Spalt 25 aus und erstreckt sich entlang einer Innenseite 26 einer Seitenscheibe 27 nach oben hin in Richtung Dach und bildet dann einen Aufprallschutz für den Kopfbereich des auf dem Fahrzeugsitz ruhenden Fahrzeuginsassen 2. Ein definiertes Verschwenken eines oberen Randbereiches 28 der Verkleidung 11 beim Entfalten des Gassackes 6 wird dadurch erzielt, daß die Verkleidung 11 mit Abstand zu den beiden längsseitigen Enden 29, 29' des Gassackes 6 an der Seitenwand 3, das heißt im Ausführungsbeispiel an der Fahrzeugtür 3' befestigt ist und zwar etwa in Höhe eines unteren Randbereiches 30 des zusammengefalteten Gassackes 6.

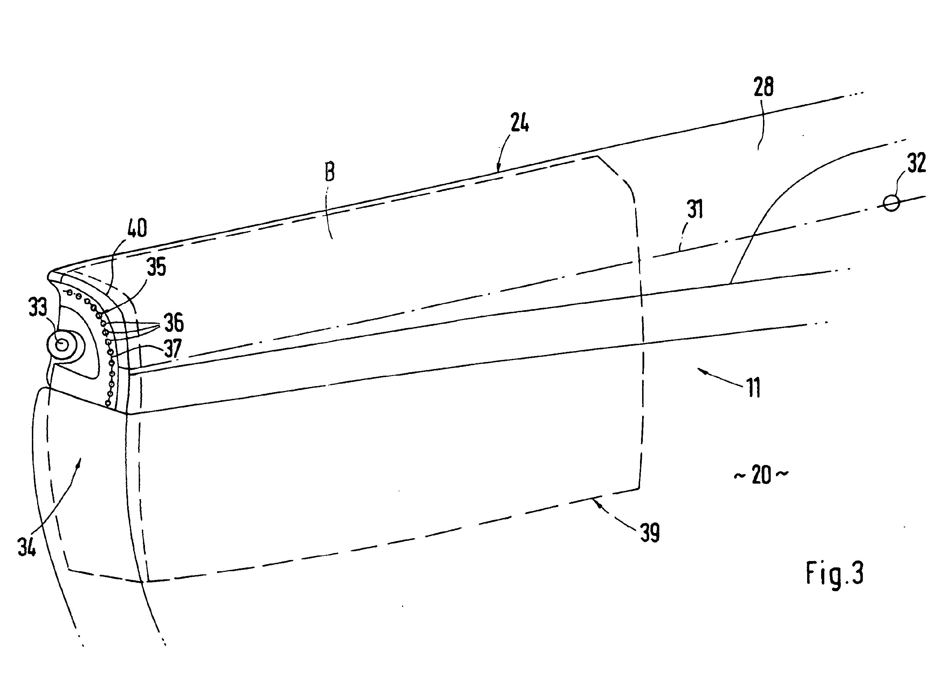

Eine - in der Seitenansicht gesehen - ideelle Verbindungslinie 31 durch die beiden beabstandeten Befestigungen 32, 33 der Verkleidung 11 bildet quasi eine Schwenkachse (Scharnierlinie) für den verschwenkbaren oberen Randbereich 28 der Verkleidung 11. Zur Unterstützung der Schwenkbewegung in Richtung Fahrgastraum 20 ist an der angrenzenden Stirnseite 34 der Verkleidung 11 - etwa in Höhe der Seitenaufprallschutzeinrichtung 1 - eine definierte Schwächung 35 vorgesehen. Benachbart der ideellen Verbindungslinie 31 oder etwas oberhalb kann an der Verkleidung 11 eine langgestreckte Querschnittsverringerung zur Unterstützung der Schwenkbewegung ausgebildet sein (nicht näher dargestellt). Die in Fahrtrichtung R gesehen vorneliegende Befestigung 32 der Verkleidung 11 ist im Ausführungsbeispiel benachbart eines innenliegenden Türöffners der Fahrzeugtür 3' vorgesehen. Die in Fahrtrichtung gesehen hintenliegende Befestigung 33 der Verkleidung 11 ist an der querverlaufenden Stirnseite 34 der Fahrzeugtür 3' angeordnet. Die stirnseitige Schwächung 35 verläuft parallel zu der dem Fahrgastraum 20 zugekehrten Außenkontur 40 der Verkleidung. Gemäß Fig. 3 ist die Schwächung 35 mit geringem Abstand zur Außenkontur 40 der Verkleidung 11 angeordnet. Die Schwächung 35 wird entsprechend Fig. 3 durch mehrere mit geringem Abstand zueinander angeordnete Bohrungen 36 gebildet, wobei die Mittelpunkte der Bohrungen 36 auf einer gemeinsamen bogenförmigen Mittellinie 37 liegen. Zwischen zwei benachbarten Bohrungen 36 erstreckt sich jeweils ein schmaler Verbindungssteg. Im Ausführungsbeispiel liegt das untere Ende der Schwächung 35 geringfügig tiefer als die ideelle Verbindungslinie 31.

Ferner kann die Schwächung 35 durch mehrere aneinandergesetzte längliche schlitzförmige Öffnungen gebildet werden (nicht näher dargestellt). Die Bohrungen 36 bzw. die schlitzförmigen Öffnungen werden nachträglich nach der Herstellung der Verkleidung 11 durch Bohren, Fräsen, Stanzen oder dgl. an der Verkleidung 11 angebracht. Auch durchgehende V-förmige oder halbkreisförmige werkzeugfallende Einkerbungen am Trägerteil 17 der Verkleidung 11 können die stirnseitige Schwächung 35 bilden. Die stirnseitige Befestigung 33 und die Schwächung 35 werden durch eine aufgesetzte Abdeckkappe 38 verkleidet. Die Abdeckkappe 38 ist durch eine Klips- oder Rastverbindung an der Verkleidung 11 befestigt. Das beispielsweise im Spritzgußverfahren aus einem geeigneten Kunststoff gefertigte Trägerteil 17 der Verkleidung 11 umfaßt zumindest benachbart der Seitenaufprallschutzeinrichtung 1 eine eingelegte netzartige Gewebeeinlage 39. Die Umrißlinien der Gewebeeinlage 39 sind in den Fig. 1 und 3 gestrichelt dargestellt. Anstelle der eingelegten Gewebeeinlage 39 könnte auch eine aufgesetzte dünnwandige Blechverstärkung vorgesehen sein.

In Ruhestellung der Seitenaufprallschutzeinrichtung 1 nimmt der obere Randbereich 28 der Verkleidung 11 die Position B ein (Fig. 2).

Bei einer crashbedingten Aktivierung der Seitenaufprallschutzeinrichtung 1 wird der Gassack 6 durch die Druckgasquelle 4 aufgeblasen. Nach dem Aufreißen der Umhüllung 7 hebt der Gassack 6 die Verkleidung 11 nach oben hin an, so daß die obere randseitige Einhängeverbindung gelöst wird. Danach reißt das Verkleidungsteil 11 stirnseitig im Bereich der Schwächung 35 auf und der obere Randbereich 28 verschwenkt beim Austreten des Gassackes über Zwischenstellungen z.B. C in die Endposition D. Beim Verschwenken des oberen Randbereiches 28 von der Position B in die Endposition D ändert sich - im Querschnitt gesehen - der Formverlauf des oberen Randbereiches 28, das heißt, der Randbereich 28 wird gestreckt (Fig. 2).

## Patentansprüche

1. Seitenaufprallschutzeinrichtung (1) für einen Fahrzeuginsassen (2), die in eine Seitenwand (3, 3') eines Kraftfahrzeuges, insbesondere in eine Fahrzeugtür (3') integriert ist und eine Druckgasquelle (4) sowie einen durch diese aufblasbaren Gassack (6) aufweist, wobei der zusammengefaltete langgestreckte Gassack (6) im Ruhezustand entlang dem oberen Rand (10) der Seitenwand (3, 3') hinter einer inneren Verkleidung (11) angeordnet ist und beim Entfalten im Bereich der Brüstung (24) der Seitenwand (3, 3') durch einen zwischen dem oberen Rand (21) der Verkleidung (11) und der Seitenwand (3) gebildeten Spalt (25) nach oben hin austritt und sich entlang einer Innenseite (26) einer Seitenscheibe (27) nach oben hin als Aufprallschutz für den Kopfbereich des Fahrzeuginsassen (2) erstreckt, **dadurch gekennzeichnet, daß** die einteilige Verkleidung (11) mit Abstand zu den beiden längsseitigen Enden (29, 29') des Gassackes (6) etwa in Höhe eines unteren Randbereiches (30) des Gassackes (6) an der Seitenwand (3) befestigt ist, wobei - in der Seitenansicht gesehen - eine ideelle Verbindungslinie (31) durch die beiden beabstandeten Befestigungen (32, 33) eine Schwenkachse (B) für den verschwenkbaren oberen Randbereich (28) der einteiligen Verkleidung (11) beim Entfalten des Gassackes (6) bildet und dass an der Stirnseite (34) der Verkleidung (11) etwa in Höhe des verschwenkbaren oberen Randbereiches (28) eine definierte Schwächung (35) vorgesehen ist.

2. Seitenaufprallschutzeinrichtung nach Anspruch 1, **dadurch gekennzeichnet, dass** die in Fahrtrichtung (R) gesehen vorneliegende Befestigung (32) der Verkleidung (11) benachbart einem innenliegenden Türöffner der Fahrzeugtür (3') verläuft.

3. Seitenaufprallschutzeinrichtung nach Anspruch 1, **dadurch gekennzeichnet, dass** die in Fahrtrichtung (R) gesehene hintenliegende Befestigung (33) der Verkleidung (11) benachbart der stirnseitigen Schwächung (35) der Verkleidung (11) angeordnet ist.

4. Seitenaufprallschutzeinrichtung nach Anspruch 1, **dadurch gekennzeichnet, dass** die Schwächung (35) an der Stirnseite (34) zumindest abschnittsweise parallel zu der dem Fahrgastraum (20) zugekehrten Außenkontur (40) der Verkleidung (11) verläuft.

5. Seitenaufprallschutzeinrichtung nach Anspruch 3, **dadurch gekennzeichnet, dass** die Schwächung (35) mit geringem Abstand zur bogenförmigen Außenkontur (40) der Verkleidung (11) angeordnet ist.

6. Seitenaufprallschutzeinrichtung nach einem der vorangegangenen Ansprüche, **dadurch gekennzeichnet, dass** die Schwächung (35) durch mehrere mit Abstand zueinander angeordnete Bohrungen (36) gebildet wird, wobei die Mittelpunkte der Bohrungen (36) auf einer gemeinsamen, bogenförmig ausgebildeten Mittellinie (37) liegen und daß zwischen zwei benachbarten Bohrungen (36) jeweils ein Verbindungssteg angeordnet ist.

7. Seitenaufprallschutzeinrichtung nach einem der vorangegangenen Ansprüche, **dadurch gekennzeichnet, dass** die Schwächung (35) durch mehrere aneinandergesetzte schlitzförmige Öffnungen gebildet wird, die mit Abstand zueinander angeordnet sind.

8. Seitenaufprallschutzeinrichtung nach einem der vorangegangenen Ansprüche, **dadurch gekennzeichnet, dass** die stirnseitige Schwächung (35) durch zumindest eine durchgehende V-förmige oder halbkreisförmige werkzeugfallende Einkerbung am Trägerteil (17) der Verkleidung (11) gebildet wird.

9. Seitenaufprallschutzeinrichtung nach einem der vorangegangenen Ansprüche, **dadurch gekennzeichnet, dass** die stirnseitige Befestigung (33) und die Schwächung (35) der Verkleidung (11) durch eine aufgesetzte Abdeckkappe (38) verkleidet sind.

10. Seitenaufprallschutzeinrichtung nach einem der vorangegangenen Ansprüche, **dadurch gekennzeichnet, dass** innerhalb des Trägerteiles (17) der Verkleidung (11) zumindest benachbart der Seitenaufprallschutzeinrichtung (1) eine eingelegte netzartige Gewebeeinlage (39) vorgesehen ist.

## Claims

1. A side impact protection device (1) for a vehicle occupant (2), said device (1) being integrated into a side wall (3, 3') of a motor vehicle, especially into a vehicle door (3'), and having a compressed-gas source (4) and an air bag (6) inflatable by the latter, wherein the elongate folded air bag (6) is arranged, in its inoperative position, along the upper edge (10) of the side wall (3, 3') behind an inner lining (11) and, upon inflation, issues upwards through a gap (25) formed between the upper edge (21) of the lining (11) and the side wall (3) in the region of the window sill (24) of the side wall (3, 3') and extends upwards along an inner surface (26) of a side window (27) to provide impact protection for the head region of the vehicle occupant (2), **characterised in that** the one-piece lining (11) is fixed to the side wall (3) approximately at the height of a lower edge region (30) of the air bag (6) with spacing from the two longitudinal ends (29, 29') of the air bag (6), wherein - seen in side view - an imaginary connecting line (31) through the two spaced fixings (32, 33) forms a pivoting axis (B) for the pivotable upper edge region (28) of the one-piece lining (11) during inflation of the air bag (6), and **in that** a defined weakening (35) is provided at the end (34) of the lining (11) approximately at the height of the pivotable upper edge region (28).

2. A side impact protection device according to claim 1, **characterised in that** the front fixing (32) - seen in the direction of travel (R) - for the lining (11) extends adjacent to an inner door opener for the vehicle door (3').

3. A side impact protection device according to claim 1, **characterised in that** the rear fixing (33) - seen in the direction of travel (R) - for the lining (11) is arranged adjacent to the end weakening (35) of the lining (11).

4. A side impact protection device according to claim 1, **characterised in that** the weakening (35) at the end (34) at least partly extends parallel to the outer contour (40) of the lining (11), the outer contour (40) facing the passenger compartment (20).

5. A side impact protection device according to claim 3, **characterised in that** the weakening (35) is arranged with slight spacing from the curved outer contour (40) of the lining (11).

6. A side impact protection device according to any one of the preceding claims, **characterised in that** the weakening (35) is formed by a plurality of mutually spaced holes (36), wherein the centres of the holes (36) lie on a common curved centre line (37), and **in that** a connecting web is arranged between two respective adjacent holes (36).

7. A side impact protection device according to any one of the preceding claims, **characterised in that** the weakening (35) is formed by a plurality of adjacent slot-type openings arranged with mutual spacing.

8. A side impact protection device according to any one of the preceding claims, **characterised in that** the end weakening (35) is formed by at least one continuous V-shaped or semi-circular, tool-formed notch in the supporting part (17) of the lining (11).

9. A side impact protection device according to any one of the preceding claims, **characterised in that** the end fixing (33) and the weakening (35) of the lining (11) are covered by an attached covering cap (38).

10. A side impact protection device according to any one of the preceding claims, **characterised in that** an inlaid, mesh-type fabric insert (39) is provided within the supporting part (17) of the lining (11) at least adjacent to the side impact protection device (1).

## Revendications

1. Dispositif de protection contre le choc latéral (1) pour un occupant de véhicule (2), qui est intégré dans une paroi latérale (3, 3') d'un véhicule automobile, en particulier dans une portière de véhicule (3') et qui présente une source de gaz comprimé (4) ainsi qu'un coussin à gaz (6) gonflable grâce à cette dernière, le coussin à gaz (6) replié étendu de tout son long est agencé au repos le long du bord supérieur (10) de la paroi latérale (3, 3') derrière un revêtement intérieur (11) et sort vers le haut lors du déploiement dans la zone de l'appui (24) de la paroi latérale (3, 3') à travers un interstice (25) formé entre le bord supérieur (21) du revêtement (11) et la paroi latérale (3) et s'étend le long d'une face interne (26) d'une vitre latérale (27) vers le haut sous forme de protection contre le choc pour la zone de la tête de l'occupant de véhicule (2), **caractérisé en ce que** le revêtement (11) est fixé à distance des deux extrémités côté longitudinal (29, 29') du coussin à gaz (6) à peu près à la hauteur d'une zone périphérique inférieure (30) du coussin à gaz (6) au niveau de la paroi latérale (3), une ligne de jonction idéale (31) à travers les deux fixations espacées (32, 33) formant - représentée sur la vue de côté - un axe de pivotement (B) pour la zone du bord supérieur (28) pivotante du revêtement (11) lors du déploiement du coussin à gaz (6) et **en ce qu'**un affaiblissement défini (35) est prévu au niveau de la face terminale (34) du revêtement (11) à peu près à la hauteur de la zone du bord supérieur (28) pivotante.

2. Dispositif de protection contre le choc latéral selon la revendication 1, **caractérisé en ce que** la fixation (32) du revêtement (11) se trouvant devant et vue dans le sens de la marche (R) s'étend de manière adjacente à un ouvre-porte intérieur de la portière de véhicule (3').

3. Dispositif de protection contre le choc latéral selon la revendication 1, **caractérisé en ce que** la fixation (33) du revêtement (11) se trouvant derrière et vue dans le sens de la marche (R) est disposée adjacente à l'affaiblissement côté face terminale (35) du revêtement (11).

4. Dispositif de protection contre le choc latéral selon la revendication 1, **caractérisé en ce que** l'affaiblissement (35) au niveau de la face terminale (34) s'étend au moins par sections parallèlement au contour extérieur (40) du revêtement (11) adjacent à l'habitacle (20).

5. Dispositif de protection contre le choc latéral selon la revendication 3, **caractérisé en ce que** l'affaiblissement (35) est disposé à faible distance du contour extérieur en arc (40) du revêtement (11).

6. Dispositif de protection contre le choc latéral selon l'une quelconque des revendications précédentes, **caractérisé en ce que** l'affaiblissement (35) est formé par plusieurs perçages (36) pratiqués à distance les uns des autres, les centres des perçages (36) se trouvant sur une ligne médiane commune (37) réalisée en forme d'arc et **en ce qu'**une entretoise de raccordement est agencée à chaque fois entre deux perçages adjacents (36).

7. Dispositif de protection contre le choc latéral selon l'une quelconque des revendications précédentes, **caractérisé en ce que** l'affaiblissement (35) est formé par plusieurs ouvertures jointives en forme de fente, qui sont disposées à distance les unes des autres.

8. Dispositif de protection contre le choc latéral selon l'une quelconque des revendications précédentes, **caractérisé en ce que** l'affaiblissement côté face terminale (35) est formée par au moins une entaille créée par outil semi-circulaire ou en forme de V continue au niveau de la partie porteuse (17) du revêtement (11).

9. Dispositif de protection contre le choc latéral selon l'une quelconque des revendications précédentes, **caractérisé en ce que** la fixation côté face terminale (33) et l'affaiblissement (35) du revêtement (11) sont recouverts par une capot (38) posé.

10. Dispositif de protection contre le choc latéral selon l'une quelconque des revendications précédentes, **caractérisé en ce qu'**une couche de tissu réticulaire déposée (39) est prévue à l'intérieur de la partie porteuse (17) du revêtement (11) au moins adjacente au dispositif de protection contre le choc latéral (1).
